# EUROPÄISCHE PATENTSCHRIFT

(11) **EP 1 242 261 B1**
(45) Veröffentlichungstag und Bekanntmachung des Hinweises auf die Patenterteilung: **02.07.2003**
(21) Anmeldenummer: 00990533.2
(22) Anmeldetag: 14.12.2000
(51) Int. Cl.: B60K 41/26, B60K 17/14, B60K 7/00, B60L 7/24, B60T 13/74

(54) **ELEKTRISCHER ANTRIEB FÜR EIN FAHRZEUG**
ELECTRICAL DRIVE FOR A VEHICLE
ENTRAINEMENT ELECTRIQUE D'UN VEHICULE

(30) Priorität: 15.12.1999 DE 19960327
(43) Veröffentlichungstag der Anmeldung: 25.09.2002
(73) Patentinhaber: ROBERT BOSCH GMBH, 70442 Stuttgart (DE)
(72) Erfinder: HAAS, Hardy, 71254 Ditzingen-Schoeckingen (DE); FAYE, Ian, 70192 Stuttgart (DE); VOLLERT, Herbert, 71665 Vaihingen/Enz (DE)
(86) Internationale Anmeldenummer: DE0004460
(87) Internationale Veröffentlichungsnummer: WO01044007

(56) Entgegenhaltungen:
- CH-A- 161 213
- DE-A- 19 519 198
- FR-A- 2 663 591
- US-A- 4 799 564
- US-A- 5 139 121
- US-A- 5 813 488

## Beschreibung

### Stand der Technik

Die Erfindung betrifft einen elektrischen Antrieb für ein Fahrzeug mit Merkmalen des Oberbegriffs des Anspruchs 1.

Derartige elektrische Antriebe sind an sich bekannt. Wie werden insbesondere in Elektro- oder Hybridfahrzeugen verwendet und von einer Batterie (eigentlich Akkumulator) oder auch einer Brennstoffzelle mit elektrischer Energie versorgt. Ein Hybridfahrzeug fährt beispielsweise innerhalb eines Stadtgebietes mit einem Verbrennungsmotor, der zugleich die Batterie wieder auflädt.

Die bekannten elektrischen Antreibe, beispielsweise gemäß FR 2 663 591 A, weisen einen Elektromotor sowie eine Momentenübertragungseinrichtung, beispielsweise ein Getriebe, auf, mit der ein Drehmoment des Elektromotors auf ein oder mehrere Fahrzeugräder übertragbar ist. Es kann ein Elektromotor zum Antrieb aller Fahrzeugräder, der Räder einer Achse oder zum Antrieb eines Fahrzeugrades vorgesehen sein.

Auch ist es bekannt, den elektrischen Antrieb zum Bremsen des Fahrzeugs zu verwenden, indem der Elektromotor als Generator betrieben wird und elektrischen Strom in die Batterie einspeist. Diese Art des Bremsens hat allerdings den Nachteil, dass das Bremsmoment drehzahlabhängig und mithin die Bremswirkung bei niedrigen Geschwindigkeiten gering ist. Zudem lässt sich das Fahrzeug nicht bis zum Stillstand abbremsen, da bei Stillstand keine Bremswirkung vorhanden ist. Es sind deswegen immer zusätzliche Bremsen, beispielsweise herkömmliche Scheiben- oder Trommelbremsen notwendig.

Ferner ist es aus CH 161 213 A bekannt, in einem Fahrzeug eine Verbrennungskraftmaschine zum Antrieb eines Generators, einen oder mehrere Elektromotore zum Antrieb der Fahrzeugräder sowie eine Radbremseinrichtung vorzusehen. Der Energiefluss aus dem Generator unterliegt einer schaltbaren Verzweigung, von der elektrisch Energie entweder zu dem Elektromotor oder den Elektromotoren oder zu der Radbremseinrichtung fließt.

### Vorteile der Erfindung

Der erfindungsgemäße elektrische Antrieb mit den Merkmalen des Anspruchs 1 weist eine Radbremseinrichtung auf, die über die Momentenübertragungseinrichtung mit dem Elektromotor des elektrischen Antriebs betätigbar ist. Zur Betätigung der Radbremseinrichtung weist die erfindungsgemäße Momentenübertragungseinrichtung eine Verzweigung auf, die einen wahlweisen Antrieb des Fahrzeugs mittels des Elektromotors oder eine Betätigung der Radbremseinrichtung ermöglicht. Mittels Elektromotor betätigbare, sog. elektromechanische Radbremseinrichtungen sind an sich bekannt, beispielhaft wird verwiesen auf die WO 96/03301. Die bekannten Radbremseinrichtungen weisen einen Elektromotor auf, mit dem über ein Rotations/Translations-Umsetzungsgetriebe, üblicherweise ein Schraubgetriebe, ein Reibbremsbelag an einen Bremskörper, beispielsweise eine Bremsscheibe oder eine Bremstrommel andrückbar und auch wieder abhebbar ist. Beim erfindungsgemäßen elektrischen Antrieb erfolgt die Betätigung der Radbremseinrichtung vom Elektromotor des elektrischen Antriebs über die Momentenübertragungseirichtung. Die Verzweigung der Momentenübertragungseinrichtung ermöglicht einen wahlweisen Antrieb eines Fahrzeugrades oder eine Betätigung der Radbremseinrichtung.

Die Erfindung hat den Vorteil, dass der Elektromotor des elektrischen Antriebs auch zur Betätigung der Radbremseinrichtung verwendet wird. Die Radbremseinrichtung benötigt keinen eigenen Elektromotor. Dadurch wird Gewicht und Bauraum im Fahrzeug eingespart. Weiterer Vorteil der Erfindung ist, dass ein Bremsmoment der Radbremseinrichtung des elektrischen Antriebs unabhängig von der Raddrehzahl und damit von der Fahrzeuggeschwindigkeit ist. Zudem ist ein Abbremsen bis zum Stillstand möglich ebenso wie eine Feststellbremsfunktion. Unabhängig davon ist es mit dem erfindungsgemäßen elektrischen Antrieb weiterhin möglich, den Elektromotor zum Abbremsen des Fahrzeugs als Generator zu betreiben, um eine Batterie aufzuladen, jedenfalls wenn die Radbremseinrichtung nicht betätigt wird. Weiterer Vorteil der Erfindung ist, dass der Elektromotor während der Fahrt des Fahrzeugs dreht und deswegen zur Betätigung der Radbremseinrichtung nicht erst aus dem Stillstand beschleunigt werden muss, die Betätigung der Radbremseinrichtung ist dadurch sehr schnell und nahezu verzögerungsfrei möglich.

Die Unteransprüche haben vorteilhafte Ausgestaltungen und Weiterbildungen der im Hauptanspruch angegebenen Erfindung zum Gegenstand.

Bei einer Ausgestaltung der Erfindung gemäß Anspruch 2 weist die Momentenübertragungseinrichtung ein Verteilergetriebe mit einem Getriebeeingang, der mit dem Elektromotor antreibbar ist, und mit mindestens zwei Getriebeausgängen auf. Mit einem der Getriebeausgänge ist das Fahrzeugrad verbunden und antreibbar, mit einem weiteren Getriebeausgang ist die Radbremseinrichtung betätigbar, also beispielsweise deren Rotations/Translations-Umsetzungsgetriebe zum Andrücken und Abheben eines Reibbremsbelags an/von einem Bremskörper rotierend antreibbar. Die beiden Getriebeausgänge sind wahlweise mit dem Getriebeeingang antreibbar, die Getriebeausgänge sind also schaltbar.

Zum Trennen der Getriebeausgänge ist bei einer Ausgestaltung der Erfindung gemäß Anspruch 3 eine Trenneinrichtung, beispielsweise gemäß Anspruch 4 eine schaltbare Kupplung vorgesehen. Dabei kann es sich um eine reib- oder formschlüssige Kupplung handeln.

Bei einer Ausgestaltung der Erfindung gemäß Anspruch 6 weist die Momentenübertragungseinrichtung ein Differenzialgetriebe, beispielsweise ein Planetengetriebe (Anspruch 7) auf, mit dem eine Verteilung des Drehmoments des Elektromotors auf das Fahrzeugrad und die Radbremsvorrichtung in an sich beliebigem Verhältnis möglich ist, wobei auch ausschließlich das Fahrzeugrad angetrieben oder ausschließlich die Radbremseinrichtung betätigt werden kann. Diese Ausgestaltung der Erfindung hat den Vorteil, dass nicht entweder das Fahrzeugrad angetrieben oder die Radbremseinrichtung betätigt werden kann, sondern dass beides gleichzeitig möglich ist. Dadurch kann der Elektromotor im Generatorbetrieb zum Abbremsen des Fahrzeugrades benutzt und zugleich die Radbremseinrichtung betätigt werden. Weiterer Vorteil dieser Ausgestaltung der Erfindung ist, dass bei Stromausfall vom drehenden Fahrzeugrad über das Differenzialgetriebe die Radbremseinrichtung betätigt werden kann.

Bei einer Ausgestaltung der Erfindung gemäß Anspruch 8 ist eine schaltbare Drehrichtungsumkehr nach Art eines Rückwärtsganges vorgesehen. Dies hat den Vorteil, dass zur Rückwärtsfahrt und/oder zum Lösen der Radbremseinrichtung die Drehrichtung des Elektromotors nicht umgekehrt zu werden braucht.

Eine Ausgestaltung der Erfindung gemäß Anspruch 9 sieht eine mit dem Elektromotor antreibbare Hydropumpe vor, mit der ein Hydromotor zum Antrieb des Fahrzeugrades antreibbar ist. Des weiteren weist diese Ausgestaltung der Erfindung eine hydraulisch betätigbare Radbremsvorrichtung, also beispielsweise eine herkömmliche, hydraulisch betätigbare Scheibenbremszange auf, die zur Betätigung hydraulisch mit Energie aus der Hydropumpe versorgt wird. Die Betätigung der Radbremsvorrichtung kann beispielsweise in von sog. elektrohydraulischen Bremsen her bekannter Weise mit Magnetventilen erfolgen. Diese Ausgestaltung der Erfindung hat den Vorteil, dass sie sehr flexibel in der Verteilung der hydraulischen Energie von der Hydropumpe auf das oder die angetriebenen Fahrzeugräder und die hydraulisch betätigbare/n Radbremsvorrichtung/en sowie bei Verwendung einer verstellbaren Hydropumpe und/oder eines verstellbaren Hydromotors sehr flexibel in der Momentenübersetzung vom Elektromotor zum das Fahrzeugrad antreibenden Hydromotor sowie einer eventuellen Drehrichtungsumkehr ist.

### Zeichnung

Die Erfindung wird nachfolgend anhand in der Zeichnung dargestellter Ausführungsbeispiele näher erläutert. Es zeigen:
- Figur 1: einen erfindungsgemäßen elektrischen Antrieb für ein Fahrzeug in Ansicht; und
- Figuren 2-6: mechanische Schaltbilder von Ausführungsformen des Antriebs aus Figur 1.

Die Figuren sind als vereinfachte und schematisierte Darstellungen zu verstehen.

### Beschreibung der Ausführungsbeispiele

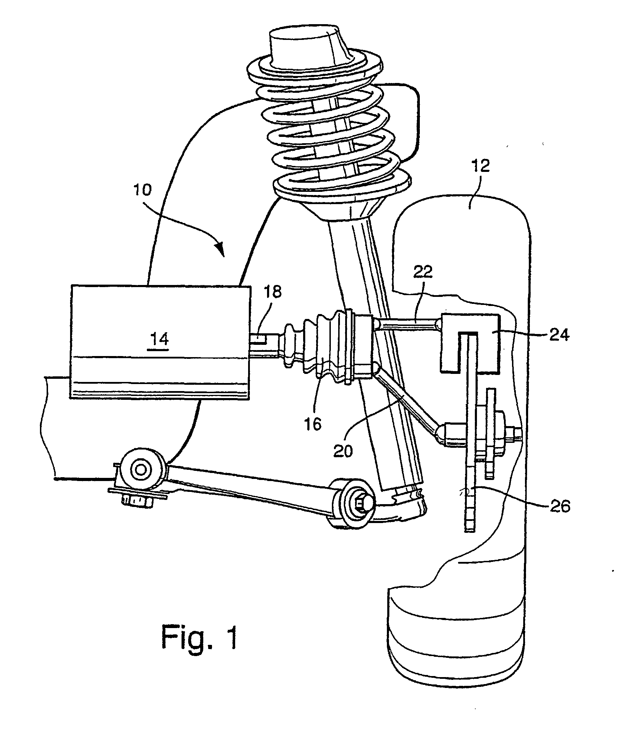

Der in Figur 1 dargestellte, erfindungsgemäße elektrische Antrieb 10 für ein Fahrzeugrad 12 weist einen Elektromotor 14 auf, der karosseriefest am Fahrzeug montiert ist. Am Motor 14 ist als Momentenübertragungseinrichtung 16 ein Getriebe 16 mit einem Getriebeeingang 18 und zwei Getriebeausgängen 20, 22 angebracht. Der Getriebeeingang 18 ist mit dem Elektromotor 14 antreibbar. Mit dem einen Getriebeausgang 20 ist über eine ebenfalls mit 20 bezeichnete Gelenkwelle das Fahrzeugrad 12 antreibbar. Wahlweise ist anstatt des Fahrzeugrades 12, bei einigen Ausführungsformen der Erfindung auch gleichzeitig mit dem Antrieb des Fahrzeugrades 12, eine Radbremseinrichtung 24 betätigbar. Die Radbremseinrichtung 24 ist als mechanisch betätigbare Scheibenbremse ausgebildet. Solche Radbremseinrichtungen 24 sind dem Fachmann an sich bekannt und, da die Radbremseinrichtung 24 nicht den eigentlichen Gegenstand der Erfindung bildet, braucht auf ihren Aufbau hier nicht näher eingegangen werden. Beispielhaft zu einem möglichen Aufbau der Radbremseinrichtung 24 wird auf die WO 96/03301 verwiesen, die eine elektromechanisch betätigbare Scheibenbremseinrichtung offenbart. Die Radbremseinrichtung 24 weist ein nicht dargestelltes Spindelgetriebe als Rotations-/Translations-Umsetzungsgetriebe auf, das eine rotierende Antriebsbewegung des Elektromotors 14, die über das Getriebe 16 und den anderen Getriebeausgang 22 auf die Radbremseinrichtung 24 übertragen wird, in eine Verschiebebewegung zum Andrücken und Abheben von Reibbremsbelägen an/von einer Bremsscheibe 26 umsetzt.

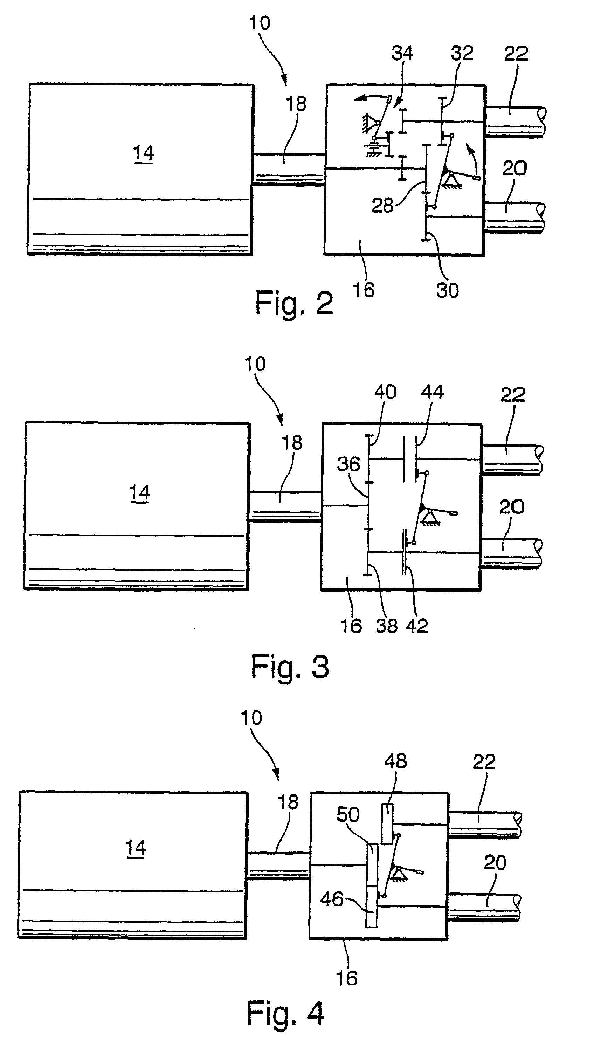

Figur 2 zeigt eine mögliche Ausführung des in Figur 1 dargestellten elektrischen Antriebs 10 für ein Fahrzeug. Die Momentenübertragungseinrichtung 16 ist hier als Zahnrad-Verteilergetriebe 16 mit dem Getriebeeingang 18 und den beiden Getriebeausgängen 20, 22 ausgebildet. Ein mit dem Getriebeeingang 18 drehfestes Zahnrad 28 ist wahlweise mit einem vom zwei Zahnrädern 30, 32 in kämmenden Eingriff bringbar, deren eines Zahnrad 30 drehfest mit dem einen Getriebeausgang 20 für den Antrieb des Fahrzeugrades 12 und dessen anderes Zahnrad 32 drehfest mit dem anderen Getriebeausgang 22 zur Betätigung der Radbremseinrichtung 24 ist. Das Verteilergetriebe 28, 30, 32 ist also schaltbar, um wahlweise einen der beiden Getriebeausgänge 20, 22 mit dem Elektromotor 14 antreiben zu können. Zusätzlich weist das Verteilergetriebe 16 eine schaltbare Drehrichtungsumkehr 34, also eine Art Rückwärtsgang für den anderen Getriebeausgang 22 zur Betätigung der Radbremseinrichtung 24 auf. Die Drehrichtungsumkehr 34 ermöglicht es, bei vorwärtsdrehendem Elektromotor 14, die Radbremseinrichtung 24 zu lösen, die Drehrichtung des Elektromotors 14 muss dazu nicht umgekehrt, der Elektromotor 14 also nicht bis zurn Stillstand abgebremst und anschließend in entgegengesetzter Richtung wieder beschleunigt werden. Ebenfalls ist es mit der Drehrichtungsumkehr 34 möglich, bei rückwärtsdrehendem Elektromotor 14 (Rückwärtsfahrt) die Radbremseinrichtung 24 zuzuspannen ohne die Drehrichtung des Elektromotors 14 umkehren zu müssen. Eine Drehrichtungsumkehr kann prinzipiell auch für den einen Getriebeausgang 20 für den Antrieb des Fahrzeugrades 12 vorgesehen werden (nicht dargestellt). Beim Einrücken der Drehrichtungsumkehr 34 muss selbstverständlich die Zahnradpaarung 28, 32 für den anderen Getriebeausgang 22 ausgerückt sein. Vorzugsweise ist auch die Zahnradpaarung 28, 30 für den einen Getriebeausgang 20 ausgerückt.

Figur 3 zeigt eine weitere Ausführungsmöglichkeit der Momentenübertragungseinrichtung 16 des erfindungsgemäßen elektrischen Antriebs 10 für ein Fahrzeug. Auch in Figur 3 ist die Momentenübertragungseinrichtung 16 als Zahnrad-Verteilergetriebe ausgebildet. Das Zahnrad-Verteilergetriebe 16 weist ein mit dem Getriebeeingang 18 drehfestes, also mit dem Elektromotor 14 antreibbares Zahnrad 36 auf, das mit zwei Zahnrädern 38, 40 kämmt, die drehfest mit den beiden Getriebeausgängen 20, 22 sind. Das Verteilergetriebe 16 weist für jeden Getriebeausgang 20, 22 eine schaltbare Kupplung 42, 44 auf, so dass wahlweise der eine oder der andere Getriebeausgang 20, 22 über das Verteilergetriebe 16 mit dem Elektromotor 14 antreibbar ist .

Bei der in Figur 4 dargestellten Ausführungsform der Erfindung ist die Momentenübertragungseinrichtung 16 als Reibrad-Verteilergetriebe ausgebildet. Das Reibrad-Verteilergetriebe 16 weist für jeden der beiden Getriebeausgänge 20, 22 ein Reibrad 46, 48 auf, die wahlweise in treibende Verbindung mit einem Treibrad 50 bringbar sind, welches über den Getriebeeingang 18 vom Elektromotor 14 antreibbar ist.

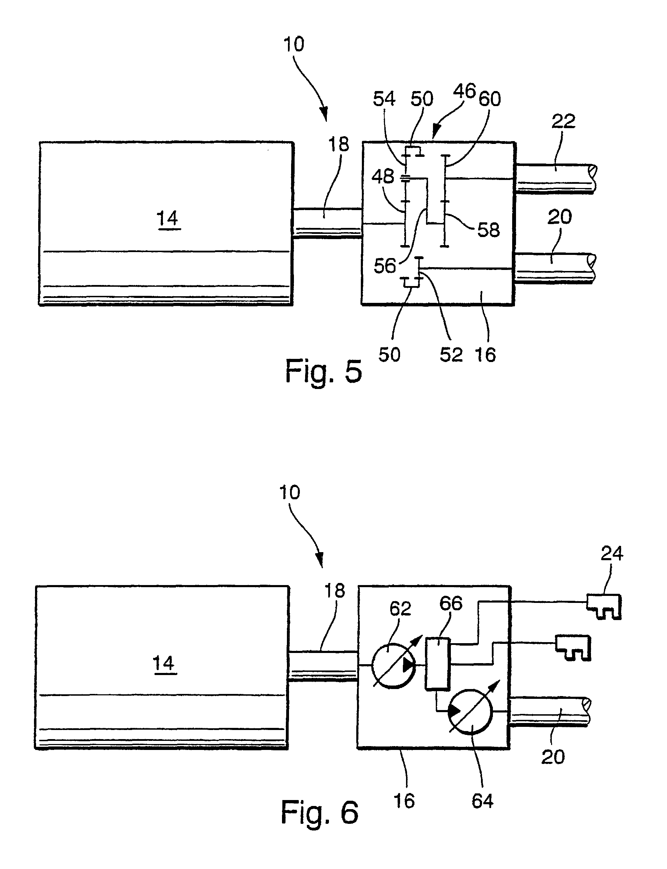

Bei der in Figur 5 dargestellten Ausführungsform der Erfindung weist die Momtentenübertragungseinrichtung 16 ein Differenzialgetriebe auf, das im dargestellten Ausführungsbeispiel als Planetengetriebe 46 ausgebildet ist. Im dargestellten Ausführungsbeispiel ist ein Sonnenrad 48 des Planetengetriebes 46 drehfest mit dem Getriebeeingang 18 verbunden. Der Antrieb des einen Getriebeausgangs 20 für den Antrieb des Fahrzeugrads 12 erfolgt über ein Hohlrad (Innenzahnrad) 50 des Planetengetriebes 46, das eine zweite Verzahnung aufweist, mit dem ein mit dem einen Getriebeausgang 20 drehfestes Zahnrad 52 kämmt. Der Antrieb des anderen Getriebeausgangs 22 für die Betätigung der Radbremseinrichtung 24 erfolgt über einen Planetenräder 54 des Planetengetriebes 46 tragenden Planetenträger 56, mit dem ein koaxial zum Sonnenrad 48 angeordnetes Zahnrad 58 drehfest ist. Dieses Zahnrad 58 kämmt mit einem Zahnrad 60 welches drehfest mit dem anderen Getriebeausgang 22 ist. Durch Stillsetzen des Planetenträgers 56 erfolgt der Antrieb des einen Getriebeausgangs 20 zum Antrieb des Fahrzeugrades 12 vom Elektromotor 14 über den Getriebeeingang 18, das Sonnenrad 48, die sich um ihre eigene Achse, jedoch wegen des stillstehenden Planetenträgers 56 nicht urnlaufenden Planetenräder 54, das Hohlrad 50 und das Zahnrad 52. Zur Betätigung der Radbremseinrichtung 24 wird statt des Planetenträgers 56 das Hohlrad 50 stillgesetzt und der Antrieb erfolgt vorn Elektromotor 14 über den Getriebeeingang 18, das Sonnenrad 48, die umlaufenden Planetenräder 54, den Planetenträger 56 und die beiden Zahnräder 58, 60. Wird der Planetenträger 56 oder das Hohlrad 50 gebremst, jedoch nicht stillgesetzt, können beide Getriebeausgänge 20, 22 gleichzeitig angetrieben werden, wobei die Drehmomentenverteilung zwischen den beiden Getriebeausgängen 2D, 22 durch Änderung des auf den Planetenträger 56 oder das Hohlrad 50 ausgeübten Bremsmoments einstellbar ist.

Ein Planetengetriebe lässt selbstverständlich auch andere als die dargestellte und beschriebene Schaltungsmöglichkeiten zu. Es muss also nicht das Sonnenrad 48 vom Elektromotor 14 angetrieben werden, sondern es können stattdessen in an sich bekannter Weise auch der Planetenträger 56 oder das Hohlrad 50 angetrieben und der Abtrieb mit den beiden übrigen Elemente, also dem Sonnenrad 48 und dem Hohlrad 50 oder dem Planetenträger 56 erfolgen.

Auch eine Drehrichtungsumkehr ist mit einem Planetengetriebe in an sich bekannter Weise möglich. Durch Hintereinanderschaltung mehrerer Planetensätze lassen sich die Variationsmöglichkeiten vergrößern und insbesondere unterschiedliche Übersetzungen erreichen.

Figur 6 zeigt eine hydraulische Ankopplung des Antriebs des Fahrzeugrades 12 und der Radbremseinrichtung 24 mittels der Momentenübertragungseinrichtung 16 an den Elektromotor 14. Die Momentenübertragungseinrichtung 16 des in Figur 6 dargestellten elektrischen Antriebs 10 für ein Fahrzeug weist ein Hydrogetriebe mit einer Hydropumpe 62, einem Hydromotor 64 und einer Magnetventile aufweisenden hydraulischen Steuereinheit 66 auf. Vorzugsweise sind die Hydropumpe 62 und der Hydromotor 64 verstellbar ausgeführt. Die Hydropumpe 62 ist mit dem Elektromotor 14 antreibbar. Sie stellt hydraulische Energie zum Antrieb eines oder auch mehrerer Fahrzeugräder 12 sowie zur Betätigung der Radbremseinrichtungen 24 zur Verfügung. Über die hydraulische Steuerschaltung 66 ist der Hydromotor 64 hydraulisch mit der Hydropumpe 62 verbindbar, wobei der Hydromotor 64 ein oder auch mehrere Fahrzeugräder 12 antreibt. Es können auch mehrere Hydromotoren 64, beispielsweise für jedes angetriebene Fahrzeugrad 12 ein Hydromotor 64, vorgesehen sein. Die Radbremseinrichtungen 24 sind bei dem in Figur 6 dargestellten Ausführungsbeispiel der Erfindung als hydraulische Bremszangen 24 ausgebildet, die über die hydraulische Steuerschaltung 66 mit hydraulischer Energie der Hydropumpe 62 beaufschlagt werden können und dadurch hydraulisch betätigbar sind. Es handelt sich hierbei an sich um eine elektrohydraulische Bremse, bei der mittels der hydraulischen Steuerschaltung 66 in an sich bekannter Weise auch eine Blockierschutz- und Schlupfregelung erfolgen kann.

## Patentansprüche

1. Elektrischer Antrieb für ein Fahrzeug, mit einem Elektromotor und mit einer Momentenübertragungseinrichtung, mit der ein Drehmoment des Elektromotors auf ein Fahrzeugrad übertragbar ist, **dadurch gekennzeichnet, dass** der elektrische Antrieb (10) eine Radbremseinrichtung (24) aufweist, und dass die Momtentenübertragungseinrichtung (16) eine Verzweigung aufweist, mit der wahlweise die Radbremseinrichtung (24) betätigbar ist.

2. Elektrischer Antrieb nach Anspruch 1, **dadurch gekennzeichnet, dass** die Momentenübertragungseinrichtung (16) ein Verteilergetriebe (28, 30, 32; 36, 38, 40; 46, 48, 50) mit einem mit dem Elektromotor (14) antreibbaren Getriebeeingang (18) und mindestens zwei Getriebeausgängen (20, 22) aufweist, wobei die beiden Getriebeausgänge (20, 22) wahlweise mit dem Getriebeeingang (18) antreibbar sind und wobei mit dem einen Getriebeausgang (20) das Fahrzeugrad (12) antreibbar und mit dem anderen Getriebeausgang (22) die Radbremseinrichtung (24) betätigbar ist.

3. Elektrischer Antrieb nach Anspruch 2, **dadurch gekennzeichnet, dass** die beiden Getriebeausgänge (20, 22) eine Trenneinrichtung (42, 44) aufweisen, mit der sie vom Getriebeeingang (18) trennbar sind.

4. Elektrischer Antrieb nach Anspruch 3, **dadurch gekennzeichnet, dass** die Trenneinrichtungen (42, 44) schaltbare Kupplungen aufweisen.

5. Elektrischer Antrieb nach Anspruch 2, **dadurch gekennzeichnet, dass** das Verteilergetriebe ein Reibradgetriebe (46, 48, 50) aufweist.

6. Elektrischer Antrieb nach Anspruch 1, **dadurch gekennzeichnet, dass** die Momentenübertragungseinrichtung (16) ein Differenzialgetriebe (46) aufweist.

7. Elektrischer Antrieb nach Anspruch 6, **dadurch gekennzeichnet, dass** das Differenzialgetriebe ein Planetengetriebe (46) ist.

8. Elektrischer Antrieb nach Anspruch 1, **dadurch gekennzeichnet, dass** die Momentenübertragungseinrichtung (16) eine schaltbare Drehrichtungsumkehr (34) aufweist.

9. Elektrischer Antrieb nach Anspruch 1, **dadurch gekennzeichnet, dass** die Momentenübertragungseinrichtung (16) eine mit dem Elektromotor (14) antreibbare Hydropumpe (62), einen mit der Hydropumpe (62) antreibbaren Hydromotor (64) zum Antrieb des Fahrzeugrades (12) und eine hydraulisch betätigbare Radbremseinrichtung (24) aufweist.

## Claims

1. Electric drive for a vehicle, having an electric motor and having a torque transmission device with which a torque of the electric motor can be transmitted to a vehicle wheel, **characterized in that** the electric drive (10) has a wheel brake device (24), and **in that** the torque transmission device (16) has a branch with which the wheel brake device (24) can be optionally activated.

2. Electric drive according to Claim 1, **characterized in that** the torque transmission device (16) has a power divider (28, 30, 32; 36, 38, 40; 46, 48, 50) with a gear mechanism input (18) which can be driven with the electric motor (14) and at least two gear mechanism outputs (20, 22), it being possible to drive the two gear mechanism outputs (20, 22) optionally with the gear mechanism input (18), and it being possible for the vehicle wheel (12) to be driven with the one gear mechanism output (20) and the wheel brake device (24) to be activated with the other gear mechanism output (22).

3. Electric drive according to Claim 2, **characterized in that** the two gear mechanism outputs (20, 22) have a separating device (42, 44) with which they can be separated from the gear mechanism input (18).

4. Electric drive according to Claim 3, **characterized in that** the separating devices (42, 44) have shiftable clutches.

5. Electric drive according to Claim 2, **characterized in that** the power divider has a friction gear (46, 48, 50).

6. Electric drive according to Claim 1, **characterized in that** the torque transmission device (16) has a differential gear (46).

7. Electric drive according to Claim 6, **characterized in that** the differential gear is a planetary gear (46).

8. Electric drive according to Claim 1, **characterized in that in that** the torque transmission device (16) has a shiftable rotation-reversing means (34).

9. Electric drive according to Claim 1, **characterized in that** the torque transmission device (16) has a hydraulic pump (62) which can be driven with the electric motor (14), a hydraulic motor (64) which can be driven with the hydraulic pump (62) in order to drive the vehicle wheel (12), and a wheel brake device (24) which can be activated hydraulically.

## Revendications

1. Entraînement électrique pour un véhicule, avec un moteur électrique et une installation de transmission de couple pour transmettre un couple de rotation du moteur électrique à une roue de véhicule,
**caractérisé en ce que**
l'entraînement électrique (10) présente une installation de freinage de roue (24) et l'installation de transmission de couple (16) présente une dérivation avec laquelle l'installation de freinage de roue (24) peut être actionnée optionnellement.

2. Entraînement électrique selon la revendication 1,
**caractérisé en ce que**
l'installation de transmission de couple (16) présente une boîte de transfert (28, 30, 32 ; 36, 38, 40 ; 46, 48, 50) avec une entrée de boîte de vitesse (18) qui peut être entraînée par le moteur électrique (14) et au moins deux sorties de boîte (20, 22), les deux sorties de boîte (20, 22) pouvant être entraînées optionnellement par l'entrée de boîte (18) alors que la roue de véhicule (12) peut être entraînée par l'une des sorties de boîte (20) et que l'installation de freinage de roue (24) est actionnée par l'autre sortie de boîte (22).

3. Entraînement électrique selon la revendication 2,
**caractérisé en ce que**
les deux sorties de boîte (20, 22) présentent une installation de coupure (42, 44) qui les sépare de l'entrée de boîte (18).

4. Entraînement électrique selon la revendication 3,
**caractérisé en ce que**
les installations de coupure (42, 44) présentent des embrayages commutables.

5. Entraînement électrique selon la revendication 2,
**caractérisé en ce que**
la boîte de transfert présente un engrenage à friction (46, 48, 50).

6. Entraînement électrique selon la revendication 1,
**caractérisé en ce que**
l'installation de transmission de couple (16) présente un engrenage différentiel (46).

7. Entraînement électrique selon la revendication 6,
**caractérisé en ce que**
l'engrenage différentiel est un engrenage planétaire (46).

8. Entraînement électrique selon la revendication 1,
**caractérisé en ce que**
l'installation de transmission de couple (16) présente une inversion du sens de rotation (34) commutable.

9. Entraînement électrique selon la revendication 1,
**caractérisé en ce que**
l'installation de transmission de couple (16) présente une pompe hydraulique (62) qui peut être entraînée par le moteur électrique (14), un moteur hydraulique (64) qui peut être entraîné par la pompe hydraulique (62) pour entraîner la roue de véhicule (12) et une installation de freinage de roue (24) à actionnement hydraulique.
